# EUROPEAN PATENT APPLICATION

(11) **EP 2 784 514 A1**
(43) Date of publication of application: **01.10.2014**
(21) Application number: 13161631.0
(22) Date of filing: 28.03.2013
(51) Int. Cl.: G01N 35/00, G01N 35/10, G01N 15/06

(54) **Reagent supply apparatus, sample analyzer, method for supplying reagent and storage medium**

(71) Applicant: SYSMEX CORPORATION, Kobe-shi, Hyogo 651-0073 (JP)
(72) Inventor: Schmidt, Carola, 24558 Henstedt-Ulzburg (DE)
(74) Representative: HOFFMANN EITLE

(57) **Abstract**

A reagent supply apparatus for supplying a reagent from a reagent container (34a) to a sample measurement section (5, 6), comprises: one or more flow channels which connect the reagent container (34a) and the sample measurement section (5, 6); a precipitate detecting section (70, 80) configured to detect a precipitate in a reagent flowing in any of said one or more flow channels; and a controller (44) configured to prohibit supply of a reagent from the reagent container (34a) to the sample measurement section (5, 6) through said one or more flow channels based on a detection of the precipitate by the precipitate detecting section (70, 80).

## Description

### TECHNICAL FIELD OF THE INVENTION

The present invention relates to reagent supply apparatus, a sample analyzer, a method for supplying reagent to a sample analyser and a storage medium storing a related computer program.

### BACKGROUND OF THE INVENTION

Sample analyzers for measuring samples using liquid reagent are known. The accuracy and precision of the measurement results by the automated analyzers are highly depending on the condition of the reagent supplied to the sample analyzer for carrying out the analysis. In order to guarantee proper conditions of the reagent, the reagent production procedure itself has to follow highest standards and it is fully controlled and monitored at any time.

However, after the production process, reagents need to be transported and stored either locally in a central warehouse or at customer sites, where the reagent is used and supplied to the sample analyser. Clear instructions are defined for transportation and storage of reagents, based on tests during development by monitoring the daily production in terms of expiry date, open stability, storage temperature, humidity and so on.

According to a known technique, a reagent barcode is scanned by the analyzer and the analyser automatically checks the product expiry date which the barcode includes in addition to other information (see the prior Japanese patent publication JP2000-310643A). Thus, surveillance of the reagent term of validity is performed.

However, even if reagent life is not expired, correct measurement results cannot be acquired when chemical characteristics of the reagent has changed. Namely, inadequate conditions of the reagent during transportation and storage might have an influence in the result of the sample analysis. In this context, there is a problem that an inadequate condition of the reagent cannot be identified at any time in a reliable manner. Severe analytical problems can show up at customer side in such cases. False patient results can be reported by the sample analyzer. Furthermore, in such cases, unnecessary costs for application and service support are an additional exposure for the user of the reagent and of the sample analyser.

### SUMMARY OF THE INVENTION

An object of the present invention is to provide a reagent supply apparatus and a sample analyzer that ensure reliable analytical patient results at any time.

In view of the above object, the present invention proposes a reagent supply apparatus for supplying a reagent from a reagent container to a sample measurement section, comprising: one or more flow channels which connect the reagent container and the sample measurement section, a precipitate detecting section configured to detect a precipitate in a reagent flowing in any of said one or more flow channels, and a controller configured to prohibit supply of a reagent from the reagent container to the sample measurement section through said one or more flow channels based on a detection of the precipitate by the precipitate detecting section.

Namely, it was found that, if reagents are transported or stored under inadequate conditions, the reagents may change their original chemical characteristics and, in particular, some reagent may start to form precipitates (like the dilution reagent). In salted solutions like the dilution reagent, extreme decrease of temperature values may cause phase separation and cause a solid substance, which has been dissolved in the reagent, to be precipitated out. This also causes a change of the pH value, thus influencing the conductivity value of the product, as well. Changes of pH value and conductivity directly affect the analyzer result. Thanks to the present invention, the reagent adequacy condition - supplied to the analyzer - can be controlled in a flow channel connecting the reagent container to the measurement section by detecting precipitates in the reagent. Thus, the present invention achieves the effect to prevent measurement results of samples from being adversely affected due to inadequate condition of the reagent. Therefore, reliability of analytical patient results is improved.

According to a further aspect of the invention, the flow channel at which the precipitate detecting section is configured to detect the precipitates is transparent, and the precipitate detecting section comprises a light source and a detector.

Based on this further aspect, the principle of light absorption or light reflection within the supply tube (or flow channel) can be employed to control the adequacy condition of the reagent supplied to the analyzer. Namely, each reagent has its own light absorption of a dedicated wave length within a dedicated light spectrum, and temporary or continuous monitoring of this known absorption range within the reagent supply tubing system ensures that the analyzer is fed with reagents in proper conditions at any time.

According to a further aspect of the invention, the precipitate detecting section is configured to continuously try to detect a precipitate while reagent is flowing in the flow channel.

Based on this further aspect, it is possible to detect the precipitate at any time during the flow of reagent, thus further improving reliability of the sample analyzer results.

According to a further aspect of the invention, the reagent supply apparatus further comprises a discarding section for discarding reagent in the one or more flow channel, wherein the controller is configured to control the discarding section to discard the reagent when the precipitate detecting section detects a precipitate.

Based on this further aspect, it is possible to avoid using the reagent including the precipitate for measurement of the sample, which reagent may have largely altered characteristics due to the presence of the precipitates. Thus, this aspect of the invention allows to avoid mistakes in the analyzer results.

According to a further aspect of the invention, the reagent supply apparatus further comprises a display, wherein the controller is configured to control the display to show alert information when the precipitate detecting section detects a precipitate.

According to a further aspect of the invention, the reagent supply apparatus further comprises a stirring section for stirring the reagent in the reagent container, wherein the controller is configured to control the stirring section to stir the reagent in the reagent container when the precipitate detecting section detects a precipitate.

Thus, it is possible to easily dissolve the precipitate in the reagent container and equalize the concentration of the reagent in the reagent container.

According to a further aspect of the invention, the reagent supply apparatus is a reagent preparing apparatus for preparing a reagent to be used by the sample measurement section, and the reagent preparing apparatus further comprises a mixing section for mixing the reagent supplied from the reagent container with a liquid so as to prepare the reagent to be used by the sample measurement section.
Based on this further aspect, the reagent preparing apparatus is connected to a water supply and the mixing section dilutes the reagent supplied from the reagent container with a water supplied from the water supply, wherein diluted reagent is supplied to the sample measurement section.

Thus, the reagent container contains a concentrated reagent which is diluted when supplied to the measurement section. The precipitates are more likely to be generated in the concentrated reagent than in a diluted reagent. According to the present invention, even if the precipitates are generated in the reagent container during transportation in a cold weather, it is possible to prevent measurement results of samples from being adversely affected by the precipitates. Therefore, it is possible to promote the usage of the concentrated reagent, which can decrease a frequency of exchanges of reagent containers.

According to a further aspect of the invention, the precipitate detecting section is configured to detect the precipitate in a flow channel connected between the reagent container and the mixing section.

According to a further aspect of the invention, the precipitate detecting section is configured to detect the precipitate in a flow channel connected between the mixing section and the sample measurement section.
According to a further aspect of the invention, the reagent is a salted solution.

According to a further aspect of the invention, it is proposed a sample analyzer, comprising: a measurement section for measuring a sample by using a reagent, and a reagent supply apparatus for supplying a reagent from a reagent container to the sample measurement section as above identified.

According to a further aspect of the invention, it is proposed a method for supplying a reagent from a reagent container to a sample measurement section through one or more flow channels which connect the reagent container and the sample measurement section, comprising the steps of:
detecting a precipitate in the reagent flowing in any of said one or more flow channels; and
prohibiting supply of a reagent from the reagent container to the sample measurement section through said one or more flow channels based on a detection of a precipitate in the reagent flowing in any of said one or more flow channels. According to a further aspect of the invention, it is proposed a storage medium storing a computer program that, when executed, causes a reagent supply apparatus to perform the steps of: detecting a precipitate in a reagent flowing in any of one or more flow channels for supplying a reagent from a reagent container to a sample measurement section; and prohibiting supply of a reagent from the reagent container to the sample measurement section through said one or more flow channels based on a detection of a precipitate in the reagent flowing in any of said one or more flow channels.

### BRIEF DESCRIPTION OF THE DRAWINGS

FIG. 1 shows the general structure of a blood sample analyzer provided with a first embodiment of the reagent supply apparatus of the present invention;

FIG. 2 briefly shows the structure of the first embodiment of the reagent supply apparatus of FIG. 1;

FIG. 3 briefly shows the structure of the controller of the reagent supply apparatus of figure 2;

FIG. 4-5 shows schematically a precipitate detecting section for detecting precipitates in the channel flow using the principle of absorption;

FIG. 6-7 shows schematically a precipitate detecting section for detecting precipitates in the channel flow using the principle of reflection;

FIG. 8-9 schematically show stirring means which can be employed in the device according to figure 2, including a magnetic stirring plate;

FIG. 10 shows a flow diagram relating to the operations of the reagent supply apparatus according to the invention;

FIG. 11 shows a second embodiment of a reagent supply apparatus according to the present invention.

### DETAILED DESCRIPTION OF THE PREFERRED EMBODIMENTS

### First Embodiment

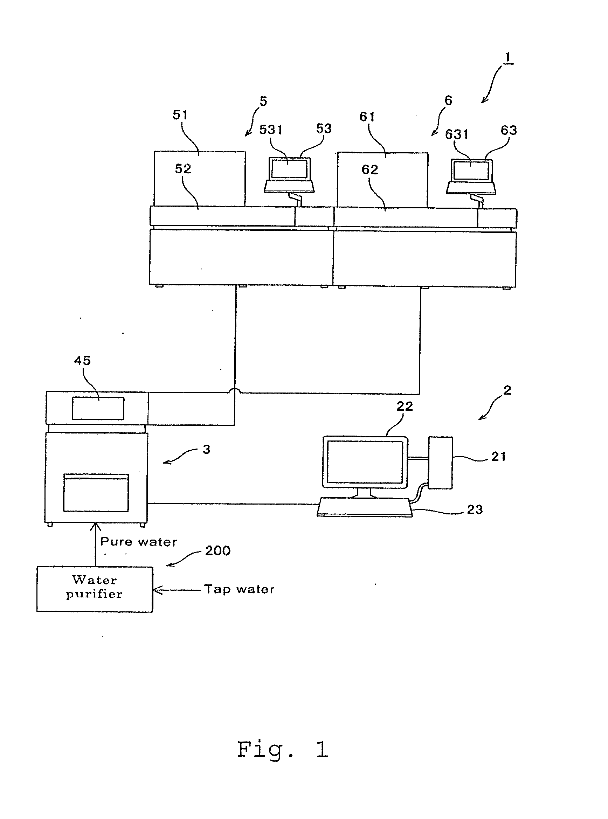

The structure of the reagent supply apparatus 3 (reagent preparing apparatus) of a first embodiment of the present invention is described below with reference to FIGS. 1 through 9. Note that in the first embodiment the reagent supply apparatus 3 of the present invention is used as part of a blood sample analyzer 1 for performing blood examinations.

The blood sample analyzer 1 is provided with a central control device 2, reagent supply apparatus 3, and two measuring devices 5 and 6, as shown in FIG. 1.

The central control device 2 is configured to be capable of communicating with the reagent supply apparatus 3. The central control device 2 also has the function of accumulating the information received from the reagent supply apparatus 3. The central control device 2 is mainly configured by a main body 21, display unit 22, and input unit 23.

The reagent supply apparatus 3 is connected to a water purifier 200 for producing pure water from tap water and providing the produced pure water to external apparatuses. The water purifier 200 may be an apparatus for producing pure water by ion exchange, or an apparatus for producing pure water using a reverse osmosis membrane. The reagent supply apparatus 3 is provided to prepare a reagent at a desired concentration (hereinafter referred to as "diluted reagent") by mixing pure water with a high concentration reagent used as a reagent stock solution, and thereafter supplying the prepared diluted reagent to a measuring unit 51 (61) of a measuring device 5 (6).

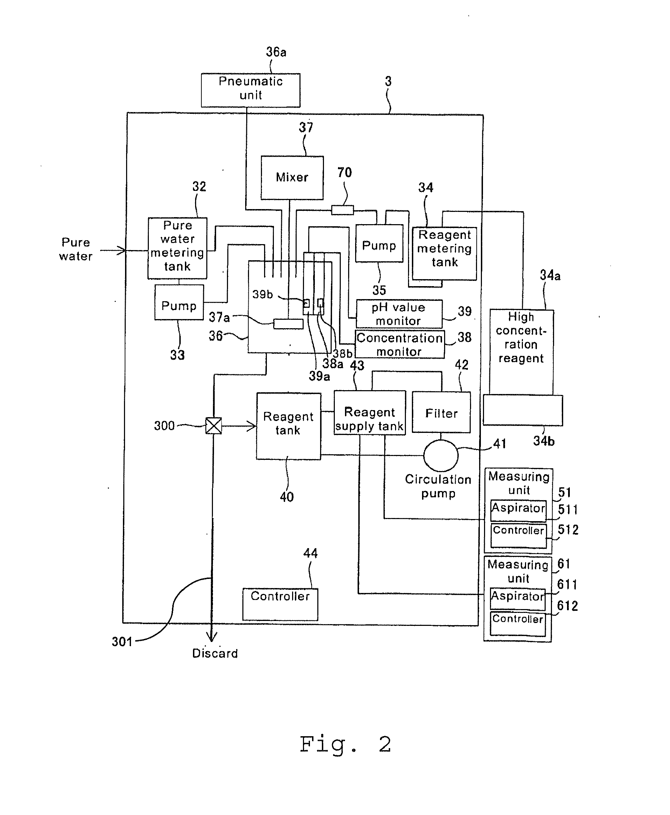

Referring to figure 2, the reagent supply apparatus 3 is provided with a pure water metering tank 32 for metering a relatively large quantity of pure water to be supplied to a diluting unit 36, and a pure water metering pump (diaphragm pump) 33 for metering a minute amount of pure water to be supplied to the diluting unit 36. The reagent supply apparatus 3 is further provided with a reagent metering tank 34 for accommodating high concentration reagent, and a high concentration reagent metering pump (for example, a diaphragm pump) 35 for metering the high concentration reagent to be supplied to the diluting unit 36. Note that the high concentration reagent to be mixed with the pure water by the reagent supply apparatus 3 is accommodated in an external reservoir 34a which is outside the reagent supply apparatus 3.

The reagent supply apparatus 3 further includes the diluting unit 36, a mixer 37, a concentration monitor 38, a pH monitor 39, a precipitate detecting section 70, a reagent tank 40, a circulation pump 41, a filter 42, a reagent supply tank 43, a controller 44 for controlling the general operation of the reagent supply apparatus 3, and a display unit 45 (refer to FIG. 1).

The pure water metering tank 32 is connected to water purifier 200, and supplies the pure water from the water purifier 200 when pure water is to be supplied to the diluting unit 36. The pure water metering pump (such as for example a diaphragm pump) 33 is configured to aspirate pure water from the pure water metering tank 32 and discharge the aspirated pure water to the diluting unit 36.

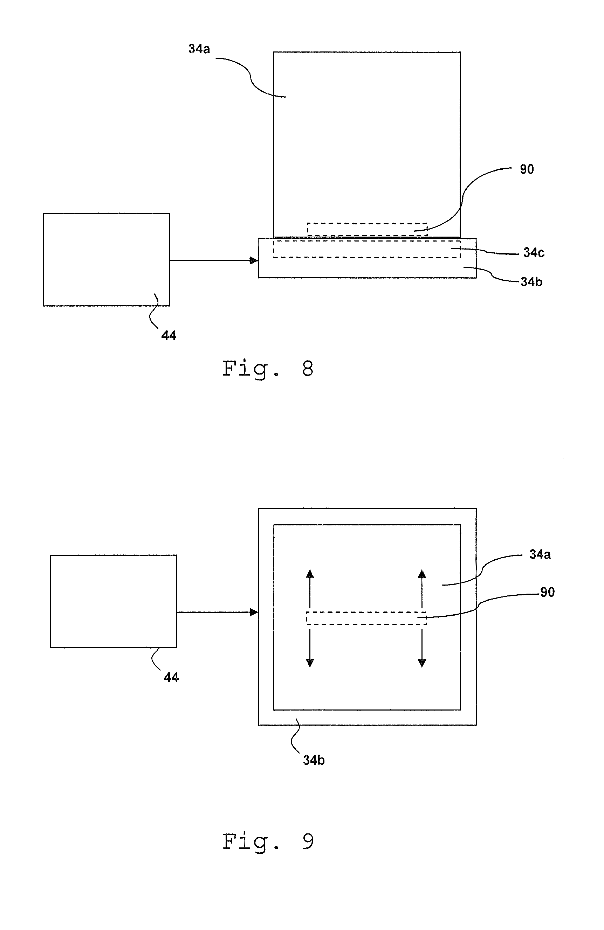

The reagent metering tank 34 has the function of metering and storing high concentration reagent accommodated in the external reagent reservoir (or container) 34a outside the apparatus. The external reagent reservoir 34a accommodating the high concentration reagent is installed on a base 34b. The external reservoir 34a is removable from the reagent supply apparatus 3. The base 34b may be external to the reagent supply apparatus 3 or may be also integrated in the apparatus 3. The base 34b includes stirring means 34c (see figure 8) configured to stir the concentrated reagent included in the external reagent reservoir 34a. According to an embodiment of the invention, the stirring means (or section) 34c may include a magnetic plate, as it will be described in the following, adapted to cause a movement of a magnetic stick included inside the external reservoir 34a. Furthermore, the base 34b may include a weight sensor that has the function of detecting the weight of the reservoir 34a. The remaining amount of high concentration reagent can be verified by the controller 44 based on the detection result of the weight sensor 34b. The high concentration reagent metering pump (diaphragm pump) 35 has the function of discharging a fixed amount of liquid, and is configured to discharge a fixed amount of high concentration reagent from the reagent metering tank 34 to the diluting unit 36.

The precipitate detecting section 70 is positioned on the flow channel connecting the pump 35 and the diluting unit 36. The precipitate detection section 70 detects whether precipitate are present in the flow of reagent from the reagent metering tank 34 to the diluting unit 36. The precipitate is a solid substance which has been dissolved in the reagent but precipitated out (separated) from the reagent due to decrease of temperature. For example, a sodium chloride is precipitated out from the reagent. When detecting the presence of precipitates in the reagent, the precipitate detection section 70 provides a corresponding detection signal to the controller 44. The presence of precipitates in the concentrated reagent provides an indication of incorrect or inadequate condition of the reagent supplied to the measuring devices 5, 6 of the sample analyzer, which may adversely affect the result of the sample analysis. Thus, based on the detection of the precipitate detection section 70, the controller 44 is configured to interrupt the supply of reagent having inadequate conditions to the measuring devices 5, 6, thus preventing the sample analyzer 1 from providing erroneous analysis results.

The diluting unit (or section) 36 includes a tank (mixing chamber) provided for receiving and mixing the pure water and high concentration reagent coming from the reagent flow channel connecting the pump 35 to the diluting unit 36. The diluting unit 36 is also connected to a disposal flow channel 301 and to the reagent tank 40 through an electromagnetic valve 300. By controlling the electromagnetic valve 300, the diluted reagent exiting from the diluting section 36 can be alternatively conveyed to the disposal flow channel 301 or to the reagent tank 40. Instead of the electromagnetic valve 300, other possible configurations including, for example, two separate valves may be adopted in order to selectively convey the diluted reagent exiting the diluting section 36 either to the disposal flow channel 301 or to the reagent tank 40.

The diluting unit 36 is also connected to an external pneumatic unit 36a, and is configured to produce a positive pressure state or negative pressure state within its interior via the pneumatic unit 36a. Within the interior of the diluting unit 36 are provided a mixing blade 37a of the mixer 37, conductivity sensor 38a of the concentration monitor 38, and a pH electrode 39a of the pH monitor 39.

The mixer 37 has a mixing blade 37a for mixing the pure water and high concentration reagent within the diluting unit 36.

The concentration monitor 38 has a conductivity sensor 38a that is in contact with the diluted reagent held in the diluting unit 36, and is configured to measure the electrical conductivity of the diluted reagent within the diluting unit 36. The conductivity sensor 38a is integrated with the temperature sensor 38b. The electrical conductivity measured by the monitor 38 is transmitted to the controller 44, and the controller 44 determines whether the measured electrical conductivity is within a predetermined range. The change in the conductivity of the prepared diluted reagent is handled as a change in concentration since the measurement of the electrical conductivity of the diluted reagent is variable and dependent on the electrical conductivity of the amount (ion content) of high concentration reagent supplied to the diluting unit 36.

The pH monitor 39 has a pH electrode 39a that comes into contact with the diluted reagent in the diluting unit 36, and is configured to measure the pH value (hydrogen ion concentration) of the diluted reagent within the diluting unit 36. The pH electrode 39a is integrated with the previously mentioned conductivity sensor 38a and temperature sensor 39b.

The reagent tank 40 is provided to accept the diluted reagent within the diluting unit 36 through the valve 300. Therefore, since the diluted reagent is stored in a predetermined amount in the reagent tank 40 even when there is no high concentration reagent in the reagent reservoir 34a, it is possible to prevent interruption of the supply of diluted reagent from the reagent supply apparatus 3 to the measuring devices 5 and 6.

The circulation pump 41 is provided to circulate the diluted reagent retained in the reagent tank 40 through the filter 42 to the reagent supply tank 43 and reagent tank 40. Part of the diluted reagent that has passed through the filter 42 is then retained in the reagent supply tank 43, and the diluted reagent is subsequently supplied from the reagent supply tank 43 to the measuring unit 51 (61) of the measuring device 5 (6).

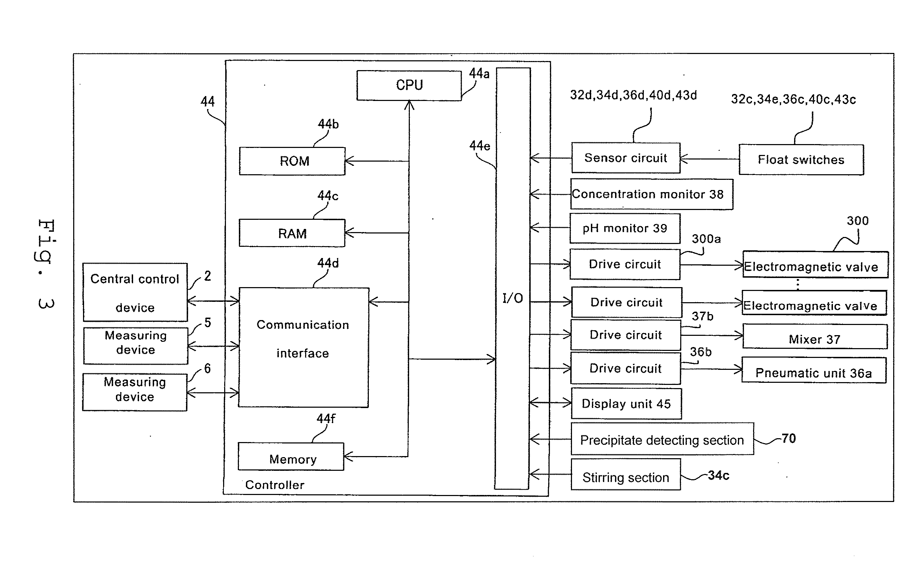

The controller 44 includes a CPU 44a, ROM 44b, RAM 44c, communication interface 44d, I/O (input/output) interface 44e, and memory 44f, as shown in FIG. 3.

The CPU 44a is provided to execute computer programs stored in the ROM 44b and computer programs loaded in the RAM 44c so as to control the operation of the reagent supply apparatus according to the embodiments of the invention. The CPU 44a is also configured to use the RAM 44c as a work area when executing these computer programs.

The communication interface 44d is configured to connect the reagent supply apparatus 3 to the central control device 2 and measuring devices 5 and 6 so as to be capable of data communication.

The I/O interface 44e is connected to each section in the reagent supply apparatus 3 through individual circuits. Specifically, the I/O interface 44e is configured to receive signals from the float switches 32c, 34e, 36c, 40c, and 43c provided in the pure water metering tank 32, reagent metering tank 34, diluting unit 36, reagent tank 40, and reagent supply tank 43 through the sensor circuits 32d, 34d, 36d, 40d, and 43d. The CPU 44a confirms the amount of liquid in each tank based on the signals from the individual flow switches. The I/O interface 44e also is configured to receive signals from the concentration monitor 38 and pH monitor 39. The I/O interface 44e is also configured to output the signals from the CPU 44a to each drive circuit 300a and the like in order to control the electromagnetic valve 300 and other electromagnetic valves. In particular, the CPU 44 may control through the I/O interface 44e the electromagnetic valve 300, so as to either supply the diluted reagent from the diluting section 36 to the reagent tank 40 or, alternatively, to discharge the diluted reagent into the disposal flow channel 301 when the precipitate detecting section 70 detects the presence of precipitates into the flow of reagent. The I/O interface 44e outputs signals from the CPU 44 to the drive circuits 36b and 37b to control the actuation of the mixer 37 and pneumatic unit 36a. The I/O interface 44e is connected to the display unit 45 so as to output image signals and the like from the CPU 44a to the display unit 45, and transmit instruction signals input by the user through the touch panel display unit 45 to the CPU 44a. Furthermore, the I/O interface 44e is connected to the precipitate detecting section 70 to receive signals therefrom and to provide them to the CPU 44. Also, the I/O interface 44e outputs signals from the CPU 44 to the stirring section 34c in order to command the stirring operation of the reagent in the concentrated reagent container (or external reagent reservoir) 34a.

The memory 44f is a nonvolatile memory configured for storing temperature information and conductivity information obtained from the concentration monitor 38, and temperature information and pH values obtained from the pH monitor 39.

The display unit 45 has the function of displaying images (pictures) based on image (picture) signals and the like received from the CPU 44a. The display unit 45 is a touch panel display, configured to transmit signals based on the user input instructions to the CPU 44a.

The measuring devices 5 and 6 are respectively blood cell measuring devices for calculating the number of red blood cells number of white blood cells and MCV values (mean corpuscular volumes) of the blood. The measuring devices 5 and 6 also have mutually identical structures as shown in FIG. 1, and are respectively provided with a measuring unit 51 and 61, sample transporter 52 and 62, and analyzer 53 and 63.

The measuring unit 51 (61) is configured to prepare a measurement sample by diluting the blood with the reagent supplied from the reagent supply apparatus 3 and measure red blood cells, white blood cells, reticulocytes, and platelets in the measurement sample by flow cytometry and electrical resistance methods. The measuring unit 51 (61) comprises a flow cell through which the measurement sample flows, a light source and a detector for detecting light via the flow cell. The measuring unit 51 (61) also is connected via a flow channel to the reagent supply tank 43 of the reagent supply apparatus 3 as shown in FIG. 2. The measuring unit 51 (61) has an aspirator 511 (611) for aspirating the prepared diluted reagent from the reagent supply tank 43 of the reagent supply apparatus 3, and a controller 512 (612) for controlling the operation of the aspirator 511 (611). The measuring unit 51 (61) is configured to actuate the aspirator 511 (611) via the controller 512 (612) to aspirate a predetermined amount of diluted reagent from the reagent supply tank 43. The aspirator 511 (611) is configured to perform the diluted reagent aspiration operation by using negative pressure and positive pressure of a pneumatic unit not shown in the drawing by operating an electromagnetic valve also not shown in the drawing based on the controls performed by the controller 512 (612).

The sample transporter 52 (62) has the function of sequentially transporting a plurality of samples to the measuring unit 51 (61).

The analyzer 53 (63) has the function of calculating the number of red blood cells, number of white blood cells, and MCV values (mean corpuscular volumes) and the like in the blood based on the measurement data of the red blood cells, white blood cells, reticulocytes, and platelets in the blood obtained by the measuring unit 51 (61).

The analyzer 53 (63) has a display unit 531 (631) as shown in FIG. 1, and is capable of displaying the analysis results on the display unit 531 (631). The analyzer 53 (63) also displays a message indicating the accuracy of the analysis result cannot be assured together with the analysis results on the display unit 531 (631) when information is received from the reagent supply apparatus 3.

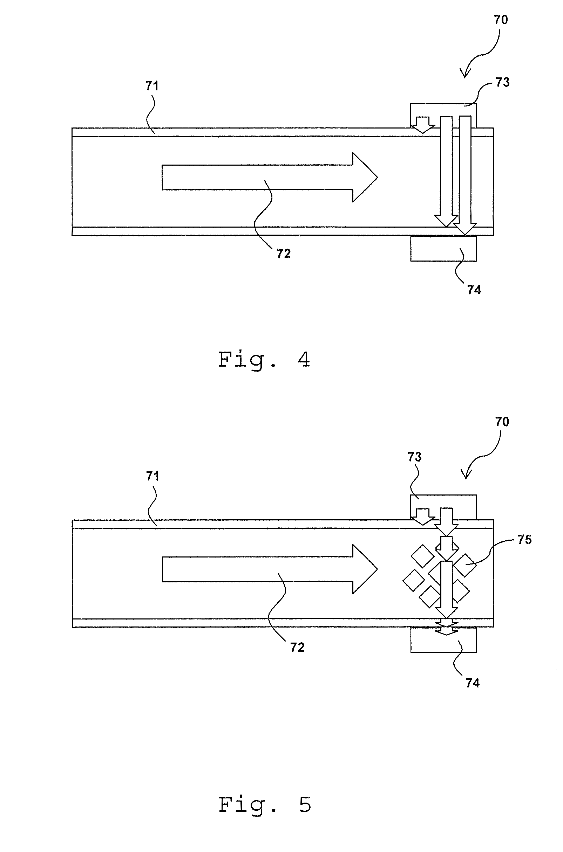

Referring now to figures 4-7, possible embodiments of the precipitate detecting section are illustrated. Advantageously, the flow channel at which the precipitate detecting section is configured to detect precipitate is transparent, and the precipitate detecting section 70 comprises a light source and a detector.

In particular, referring to figures 4-5, the precipitate detecting section 70 includes a light source 73 and a photo detector 74. The light source 73 and the photo detector 74 are placed external to the flow channel 71, through which the reagent 72 flows. The flow channel 71, according to the embodiment of figure 2, is the channel connecting the pump 35 to the diluting section 36, although according to an alternative embodiment the precipitate detecting section 70 may be also applied to a different flow channel carrying the reagent. The light source 73 and the photo detector 74 are placed on opposite sides of the flow channel 71, so that the photo detector 74 can detect light emitted from the light source 73 that passes through the flow channel 71. The light source 73 may include one or more LEDs with dedicated wave lengths.

The photo detector 74 measures the intensity of the light that passes through channel 71 and, thus, can detect changes in light intensity caused by a change of the light absorbance of the reagent flowing in the flow channel 71.

If the reagent 72 flowing inside the flow channel 71 already started crystal formation giving rise to precipitates, the absorption of the reagent will significantly deviate from a set target range. This allows to provide a continuous and objective surveillance of the status of the reagent supply by means of the precipitate detecting section.

In more detail, the light intensity detected by the photo detector 74 is specific for each reagent. If the light intensity detected by the photo detector 74 is within a predetermined range associated to the reagent being supplied (which means that the reagent has light absorption within a certain reference range), the controller 44 controls the apparatus 3 so as to supply the measuring devices 5, 6 with the reagent. If the light intensity detected by the photo detector 74 is outside a predetermined range associated to the reagent being supplied (which means that the reagent has light absorption outside a certain expected reference range), the controller 44 controls the supply apparatus 3 so as to interrupt the supply of reagent to the measuring devices 5, 6. In this case, in addition, an alert may appear phonetically and visually on the screen display 45 urging the operator to exchange the reagent, and the analyzer stops operating. Further, discharge of the reagent may be commanded through the valve 300 and the disposal flow channel 301.

Figure 4 shows a situation in which the reagent 72 flows in the flow channel 71 and no precipitate formations are present in the reagent. Figure 5 shows a situation in which the reagent 72 flows in the flow channel 71 and precipitate formations 75 are present in the reagent 72. As apparent from these two figures, the propagation path of the light from the light source 73 to the photo detector 74 changes depending on the presence of the precipitate 75 in the reagent flow. In fact, when precipitate 75 are present, the light will be scattered by passing the precipitates and exiting from the precipitate, that affects the intensity of the light received at the photo detector 74.

Thus, in the case of figure 4, the precipitate detecting section 70 will detect a light within a predetermined range and, therefore, no precipitate are detected in the reagent flow. In the case of figure 5, the photo detector 74 detects different level of light intensity due to the presence of the precipitates in the reagent flowing in the flow channel. In this latter case, the precipitate detecting section 70 will detect the presence of precipitate in the reagent.

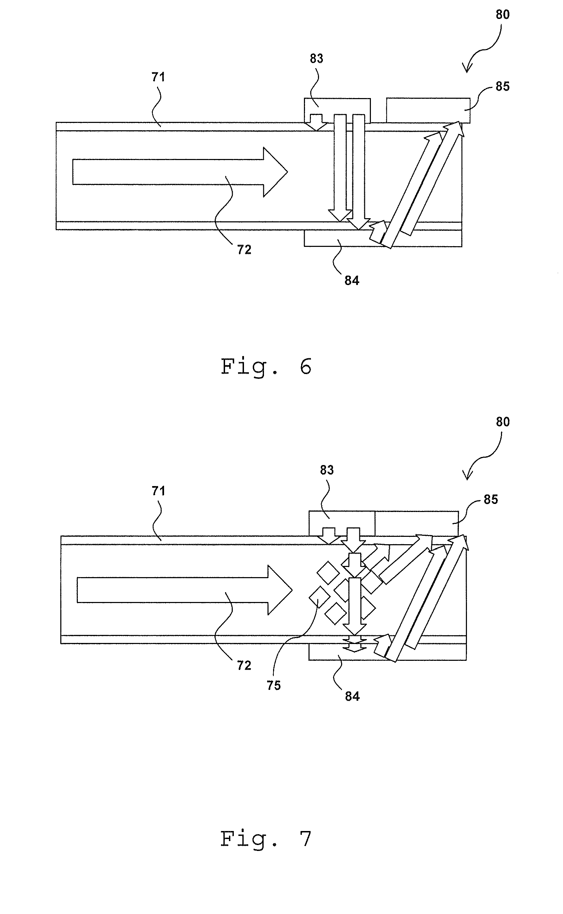

Referring to figures 6 and 7, a different realization of the precipitate detecting section 80 is described. The precipitate detecting section 80 can be used in the reagent supply apparatus of figure 2 in place of the precipitate detecting section 70 as above described.

In particular, the precipitate detecting section 80 includes a light source 83 and a photo detector 85. The light source 83 and the photo detector 85 are placed external to the flow channel 71, through which the reagent 72 flows. In this case, however, the light source 83 and the photo detector 85 are placed serially (see figure 6) on the same side of the flow channel 71. On the opposite side with respect to the light source 83 and the photo detector 85, a reflection plate 84 is located so as to reflect the light emitted from the light source 83 in the direction of the photo detector 85. The reflection place 84 could however also be absent, in case the tubing itself of the flow channel 71 is able to reflect the light back to the photo-detector 85. Thus, the need of a reflection plate depends on specific characteristics of the fluid inside the tubing and the selected light source. The surface structure of the reflection plate, the optical characteristics of the tubing and the fluid inside the tubing define the distance (position) between the light source and the photo-detector, as well as, the location of the reflection plate.

In more detail, referring to fig. 6, it is shown the case in which the reagent is flowing the flow channel 71 without precipitates in the reagent 72. Figure 7 shows, on the other hand, the propagation of light in case precipitate formations 75 are present in the reagent 72.

As apparent from these two figures 6-7, the propagation path of the light from the light source 83 to the photo detector 85 changes depending on the presence of the precipitate 75 in the reagent flow. In fact, when precipitate 75 are present, the light will be scattered by passing the precipitates and exiting from the precipitate to reach the reflection plate 84 and, furthermore, light side scatter is also caused by the precipitates 75 in the fluid, as shown by the arrows in figure 7 from the precipitates to the photo detector 85. The above phenomena affect the intensity of the light received at the photo detector 74, so that the presence of the precipitates in the reagent flowing in the flow channel 71 causes a change of the light intensity arriving at the photo-detector 85. This change indicates the condition of the reagent supplied to the analyzer, so as to avoid supply of reagent in inadequate conditions.

Referring now to figures 8 and 9, the operation of the stirring means 34c for stirring the reagent in the reservoir 34a is schematically shown. A magnetic stick 90 is placed inside the reagent reservoir 34a, which is in turn placed on the base 34b during operation of the reagent supply apparatus 3. The base 34b includes the stirring means 34c, which comprise a magnet plate 34c capable of causing the magnetic stick 90 to move inside the reservoir 34a so as to stir the reagent. The magnet plate 34c is controlled by the controller 44 and may include for example a plurality of solenoids or movable magnets.

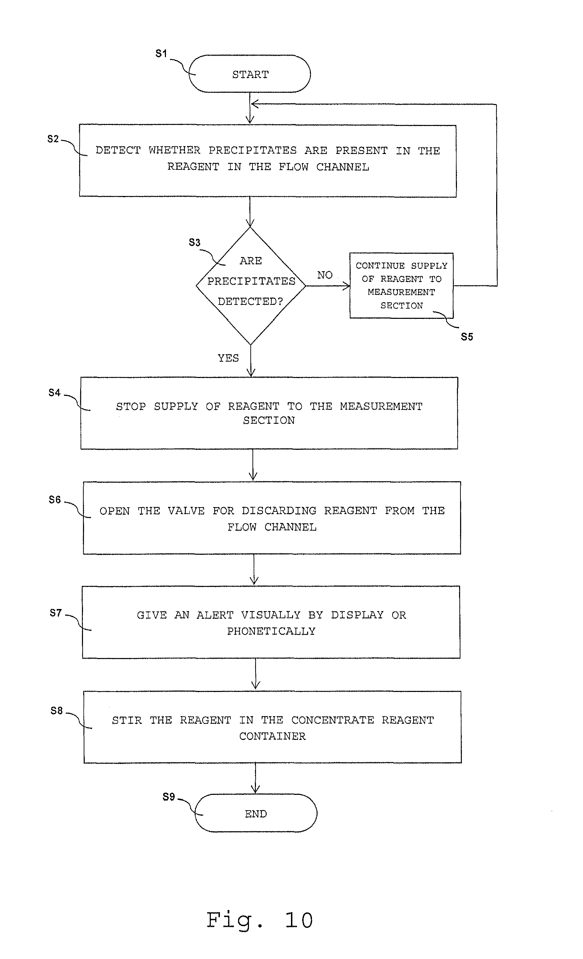

With reference now to the flow chart of figure 10, the operations of the device according to a first embodiment are described.

At step S1, the reagent supply apparatus 3 is activated and supply of reagent from the reagent reservoir 34a to the measuring device 5, 6 is initiated.
At step S2, the precipitate detecting section 70 detects whether precipitate is present in a flow channel in the reagent supply apparatus 3.

At step S3, based on the determination at step S2, it is determined whether to proceed to step S4 or S5. In case it is determined that precipitate is not present in the reagent flowing in the flow channel, the supply of reagent from the reagent reservoir 34a to the measuring device 5, 6 is continued (step S5). In this case, the precipitate detecting section 70 continues to monitor the presence/absence of precipitate in the reagent. If it is determined that precipitate is present in the reagent, the controller 44 command to stop the supply of reagent to the measuring device 5, 6 (step S4). This can be done by stopping the supply of the reagent from the concentrated reagent reservoir 34a into the flow channel, by stopping an operation of a reagent pump 35. Alternatively, the flow channel may be blocked by means of a valve for stopping the supply of the concentrated reagent from the reagent reservoir 34a. If reagent supply apparatus 3 continues the supply of the reagent including the precipitates from the reagent reservoir 34a, an amount of the precipitates flowing out from the reagent reservoir 34a increases and a concentration of constituent in the reagent in the reagent reservoir 34a may become outside a predetermined concentration. However, the reagent supply apparatus 3 makes it possible to immediately prohibit a supply of the reagent including the precipitates from the reagent reservoir 34a, and as a result, a change of the concentration of the reagent in the reagent reservoir 34a can be minimized. This allows the user to avoid wasting the reagent in the reservoir 34a even if the user unintentionally supplies the reagent including the precipitates from the reservoir 34a. Therefore, the reagent supply apparatus 3 can be environment-friendly.

Then, the process proceeds to step S6, in which valve 300 is controlled by the controller 44 so as to discharge the reagent through the disposal flow channel 301.

At step S7, the controller 44 commands to issue an alert, either visually on the display 45 or phonetically through an alarm sound.

At step S8, the controller 44 activate the stirring means 34c to stir the reagent in the reagent reservoir 34a.

At step S9, the operation of the reagent supply apparatus 3 can be terminated, for maintenance or intervention by an operator. Alternatively, after stirring the reagent at step S8, the process may continue by reactivating the supply of the reagent and, then, proceeding with the step of monitoring the presence of precipitates in the reagent (step S2).

According to a preferred embodiment of the invention, monitoring the reagent flowing in the flow channel in the reagent supply apparatus is performed continuously during operation of the apparatus. However, alternatively, the precipitate detection can be done at predetermined instants under the control of the controller 44. For example, the measurements could be triggered during start-up of the apparatus, shut-down of the apparatus, replacement of the reagent reservoir 34a, etc.

### Second embodiment

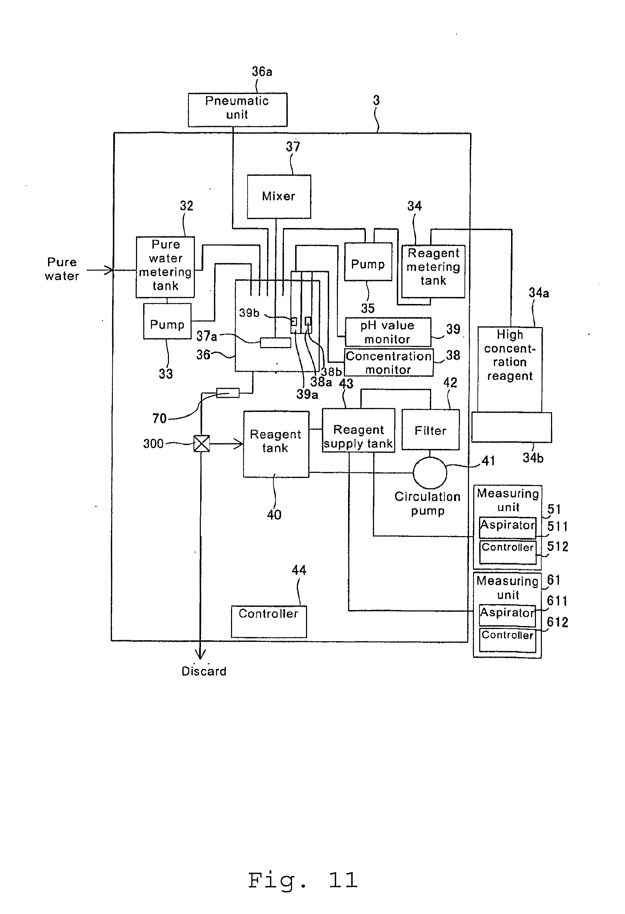

With reference to figure 11, a second embodiment of the invention is described, which differs from the first embodiment of figure 2 in that the position of the precipitate detecting section 70 is different. Namely, according to the second embodiment, the precipitate detecting section 70 is positioned downstream the diluting section 36, instead of the being positioned upstream the diluting section 36. In more detail, the precipitate detecting section 70 is positioned on a flow channel exiting from the diluting section 36, between the diluting section 36 and the valve 300. In the second embodiment, the other components of the reagent supply apparatus and of the analyzer, and the operation thereof, are as described with reference to the first embodiment of figures 1-10. Other embodiments

The above description of an embodiment applying the innovative principles of the invention is provided solely for the purpose of illustrating said principles and must thus not be considered as limiting the scope of the invention claimed herein.

For example, although in a main embodiment of the invention the reagent supply apparatus 3 is a separate apparatus with respect to the measuring device 3, 4, in an alternative embodiment of the invention the reagent supply apparatus may be incorporated into a measuring device.

Further, although in a main embodiment of the invention the presence of precipitates in the reagent is optically detected, the precipitates may be alternatively detected electrically based on a change of electric resistance caused by the precipitate.

Further, although in a main embodiment of the invention the precipitate detecting section has been disclosed as being positioned upstream and downstream of the diluting section 36, the precipitate detecting section could be positioned also on other flow channels connecting the reagent reservoir 34a to the measuring device 5, 6. For example, the precipitate detecting section could be positioned on the channel between the reagent tank 40 and the reagent supply tank 43. Alternatively, the precipitate detecting section could be positioned on a flow channel downstream the reagent supply tank 43, between the reagent supply tank 43 and the measuring devices 5, 6. As a further alternative, the precipitate detecting section 70 could be positioned on a flow channel between the reagent reservoir 34a and the reagent metering tank 34. More in general, the precipitate detecting section 70 can be positioned on any portion of flow channel through which the reagent is conveyed in the reagent supply apparatus from the reagent reservoir 34a to the measuring device 5, 6.

Also, a different arrangement of the reagent metering tank 34, of the diluting section 36, of the reagent tank 40, of the reagent supply tank 43 and of the flow channels connecting the reagent reservoir 34a to the measuring devices 5, 6 could be adopted.

Further, instead of comprising a magnetic plate and a magnetic stick as above described, the stirring means may alternatively include a motor and motion transmission means adapted to be coupled to the reagent reservoir 34a, when the reagent reservoir 34a is connected to the reagent supply apparatus 3, so that the motor can drive a movable element inside the reagent reservoir 34a through the motion transmission means.

Advantageously, the discarding section 300, 301 is positioned downstream with respect to the precipitate detecting section. In particular, the discarding section 300, 301 is configured to discard at least the reagent in the flow channel at which the precipitate detecting section is configured to detect the presence or the absence of precipitates.

Further, instead of preparing a reagent by mixing high concentration reagent with the pure water in the diluting unit 36, the diluting unit 36 may alternatively prepares a reagent by mixing other high concentration reagent with a different diluent.

## Claims

1. A reagent supply apparatus for supplying a reagent from a reagent container (34a) to a sample measurement section (5, 6), comprising:
one or more flow channels which connect the reagent container (34a) and the sample measurement section (5, 6);
a precipitate detecting section (70, 80) configured to detect a precipitate in a reagent flowing in any of said one or more flow channels; and
a controller (44) configured to prohibit supply of a reagent from the reagent container (34a) to the sample measurement section (5, 6) through said one or more flow channels based on a detection of the precipitate by the precipitate detecting section (70, 80).

2. The reagent supply apparatus according to claim 1, wherein
the flow channel at which the precipitate detecting section (70, 80) is configured to detect precipitate is transparent; and
the precipitate detecting section comprises a light source (73, 83) and a detector (74, 85).

3. The reagent supply apparatus according to one of claims 1-2, wherein
the precipitate detecting section (70, 80) is configured to continuously try to detect a precipitate while reagent is flowing in the flow channel.

4. The reagent supply apparatus according to one of claims 1-3, further comprising a discarding section (300, 301) for discarding reagent in said one or more flow channels, wherein the controller (44) is configured to control the discarding section (300, 301) to discard the reagent when the precipitate detecting section (70, 80) detects a precipitate.

5. The reagent supply apparatus according to one of claims 1-4, further comprising a display (45), wherein the controller (44) is configured to control the display (45) to show alert information when the precipitate detecting section (70, 80) detects a precipitate.

6. The reagent supply apparatus according to one of claims 1-5, further comprising a stirring section (34c) configured to stir the reagent in the reagent container (34a), wherein the controller (44) is configured to control the stirring section (34c) to stir reagent in the reagent container (34a) when the precipitate detecting section (70, 80) detects a precipitate.

7. The reagent supply apparatus according to one of claims 1-6, wherein the reagent supply apparatus (3) is a reagent preparing apparatus for preparing a reagent to be used by the sample measurement section (5, 6), and the reagent preparing apparatus further comprises a mixing section (36) for mixing the reagent supplied from the reagent container (34a) with a liquid so as to prepare the reagent to be used by the sample measurement section (5, 6).

8. The reagent supply apparatus according to claim 7, wherein the reagent preparing apparatus is connected to a water supply (200) and the mixing section (36) dilutes the reagent supplied from the reagent container (34a) with a water supplied from the water supply (200),
wherein diluted reagent is supplied to the sample measurement section (5, 6).

9. The reagent supply apparatus of claim 7 or 8, wherein the precipitate detecting section (70, 80) is configured to detect the precipitate in a flow channel connected between the reagent container (34a) and the mixing section (36).

10. The reagent supply apparatus of claim 7 or 8, wherein the precipitate detecting section (70, 80) is configured to detect the precipitate in a flow channel connected between the mixing section (36) and the sample measurement section (5, 6).

11. The reagent supply apparatus of one of claims 1-10, wherein the reagent is a salted solution.

12. A sample analyzer, comprising:
a measurement section (5, 6) for measuring a sample by using a reagent; and
a reagent supply apparatus (3) for supplying a reagent from a reagent container (34a) to the measurement section (5, 6), wherein the reagent supply apparatus (3) is according to one of claims 1-11.

13. The sample analyzer of claim 12, wherein
the measurement section (5, 6) comprises:
a flow cell;
a light source; and
a detector for detecting light via the flow cell.

14. A method for supplying a reagent from a reagent container (34a) to a sample measurement section (5, 6)
through one or more flow channels which connect the reagent container and the sample measurement section, comprising the steps of:
detecting a precipitate in the reagent flowing in any of said one or more flow channels; and
prohibiting supply of a reagent from the reagent container (34a) to the sample measurement section (5, 6) through said one or more flow channels based on a detection of a precipitate in the reagent flowing in any of said one or more flow channels.

15. A storage medium storing a computer program that, when executed, causes a reagent supply apparatus to perform the steps of:
detecting a precipitate in a reagent flowing in any of one or more flow channels for supplying a reagent from a reagent container (34a) to a sample measurement section (5, 6); and
prohibiting supply of a reagent from the reagent container (34a) to the sample measurement section (5, 6) through said one or more flow channels based on a detection of a precipitate in the reagent flowing in any of said one or more flow channels.
